(19) Europäisches Patentamt / European Patent Office / Office européen des brevets

(11) **EP 4 553 786 B1**

(12) **FASCICULE DE BREVET EUROPEEN**

(45) Date de publication et mention
de la délivrance du brevet:
**05.08.2026 Bulletin 2026/32**

(21) Numéro de dépôt: **24207460.7**

(22) Date de dépôt: **18.10.2024**

(51) Classification Internationale des Brevets (IPC):
**G06V 10/774** *(2022.01)* **G06V 10/82** *(2022.01)*
**G06V 20/40** *(2022.01)* **G06V 10/80** *(2022.01)*

(52) Classification Coopérative des Brevets (CPC):
**G06V 10/82; G06V 10/774; G06V 10/811;
G06V 20/40**

(54) **PROCEDE D'APPRENTISSAGE AUTOMATIQUE D'UN MODELE DE PREDICTION DE DONNEES MULTIMEDIA ET PROCEDE DE DETECTION D'ANOMALIES A PARTIR D'UN TEL MODELE**

VERFAHREN ZUM MASCHINELLEN LERNEN EINES MULTIMEDIA-DATENVORHERSAGEMODELLS UND VERFAHREN ZUM ERKENNEN VON ANOMALIEN AUS EINEM SOLCHEN MODELL

METHOD FOR MACHINE LEARNING A MODEL FOR PREDICTING MULTIMEDIA DATA AND METHOD FOR DETECTING ANOMALIES USING SUCH A MODEL

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **09.11.2023 FR 2312204**

(43) Date de publication de la demande:
**14.05.2025 Bulletin 2025/20**

(73) Titulaire: **Commissariat à l'Energie Atomique et aux Energies Alternatives
75015 Paris (FR)**

(72) Inventeurs:
• **NAJI, Yassine
91191 Gif-sur-Yvette Cedex (FR)**
• **SETKOV, Aleksandr
91191 Gif-sur-Yvette Cedex (FR)**
• **AUDIGIER, Romaric
91191 Gif-sur-Yvette Cedex (FR)**
• **LOESCH, Angélique
91191 Gif-sur-Yvette Cedex (FR)**

(74) Mandataire: **Atout PI Laplace
Immeuble Up On
25 Boulevard Romain Rolland
CS 40072
75685 Paris Cedex 14 (FR)**

(56) Documents cités:
• **MARIANA-IULIANA GEORGESCU ET AL: "Anomaly Detection in Video via Self-Supervised and Multi-Task Learning", ARXIV.ORG, CORNELL UNIVERSITY LIBRARY, 201 OLIN LIBRARY CORNELL UNIVERSITY ITHACA, NY 14853, 6 March 2021 (2021-03-06), XP081900036**
• **WEI DONGLAI ET AL: "MSAF: Multimodal Supervise-Attention Enhanced Fusion for Video Anomaly Detection", IEEE SIGNAL PROCESSING LETTERS, vol. 29, 2 November 2022 (2022-11-02), USA, pages 2178 - 2182, XP093177021, ISSN: 1070-9908, DOI: 10.1109/ LSP.2022.3216500**
• **ZAVRTANIK VITJAN ET AL: "Reconstruction by inpainting for visual anomaly detection", PATTERN RECOGNITION, ELSEVIER, GB, vol. 112, 17 October 2020 (2020-10-17), XP086473116, ISSN: 0031-3203, [retrieved on 20201017], DOI: 10.1016/J.PATCOG.2020.107706**

**Description**

L'invention concerne le domaine des méthodes d'apprentissage automatique et porte sur une nouvelle méthode d'apprentissage d'un modèle de prédiction de données multimedia et un procédé de détection d'anomalies utilisant un tel modèle de prédiction de ces données multimedia. Les données considérées sont, par exemple, des images, des séquences d'images, des vidéos, des séquences audio, des images multispectrales ou plus généralement des données qui peuvent être multidimensionnelles et multimodales.

La détection d'anomalies consiste à identifier des données dites "anormales" pour un contexte applicatif donné. Des données sont dites « anormales » lorsqu'elles sont inhabituelles, imprévisibles ou indésirées. Plus généralement, des données « anormales » peuvent être définies comme étant des données qui s'écartent significativement de données « normales » dans un contexte applicatif donné.

Le caractère anormal d'une donnée dépend du type de données et de l'application visée ainsi que du contexte. Par exemple, si les données sont des images d'un composant ou d'un produit issu d'une chaine de fabrication industrielle, une anomalie correspond à un défaut visible sur le composant ou le produit.

Dans le cas où les données sont des séquences vidéo, une anomalie correspond, par exemple, à un comportement inhabituel d'un piéton dans une zone donnée.

La détection d'anomalies a notamment un intérêt dans le domaine de la vidéo surveillance pour identifier un comportement inhabituel d'une personne dans un lieu public ou privé, dans le domaine de la conduite autonome, pour identifier un obstacle imprévu sur la route, dans le domaine du contrôle industriel pour identifier un défaut sur un produit fabriqué.

Dans le domaine de l'apprentissage machine, la tâche consistant à détecter une catégorie de données est réalisée par un détecteur optimisé à l'issue d'un apprentissage ou entrainement, supervisé par des données représentatives des catégories à détecter.

Les méthodes d'apprentissage machine peuvent donc être utilisées pour développer un modèle de détection d'anomalies dans des données multimedia.

Par définition, les données anormales sont intrinsèquement rares et diversifiées en comparaison aux données normales qui sont abondantes. Or, pour éviter les biais de détection, il est conseillé d'entrainer un détecteur sur des ensembles de données équilibrées entre les différentes catégories.

Pour cette raison, les méthodes d'apprentissage automatique supervisé sont peu adaptées à traiter la problématique de détection d'anomalies car la tâche d'annotation des données anormales est extrêmement couteuse et nécessite de couvrir un vaste domaine d'anomalies hétérogènes selon le contexte et l'application visée. Par ailleurs, ces approches sont peu efficaces étant donné le déséquilibre naturel des classes de données normales par rapport aux classes de données anormales.

Un problème général que vise à résoudre l'invention consiste donc à développer une méthode non supervisée d'apprentissage automatique pour la détection d'anomalies dans des données multimedia.

Les méthodes d'apprentissage automatique de classification à classe unique (« one-class classification ») sont mieux adaptées à la problématique de détection d'anomalies car elles exploitent en entrée uniquement des données « normales » et visent à prédire ou reconstruire ces données. Le modèle entrainé est ainsi basé sur l'extraction de caractéristiques pertinentes des données normales et sert par la suite pour inférer le degré d'anormalité de nouvelles données à évaluer.

Les approches par apprentissage non supervisé pour la détection d'anomalies se basent sur l'entrainement d'un modèle d'intelligence artificielle (par exemple un réseau de neurones profonds) à effectuer une tâche prétexte sur les données normales uniquement. Autrement dit, le modèle n'est pas directement entrainé à détecter des anomalies mais est entrainé à une autre tâche, par exemple reconstruire des données normales, pour ensuite utiliser le modèle de façon indirecte pour résoudre la tâche de détection d'anomalies. Lors de la phase d'inférence, un score d'anomalie peut être déduit de l'incapacité du modèle à effectuer la tâche correctement.

Afin que le modèle entrainé soit en mesure de caractériser efficacement la normalité des données et de la distinguer des anomalies, les tâches prétextes doivent satisfaire deux conditions nécessaires. Elles doivent être correctement réalisées par les données normales et elles doivent être mal réalisées en présence d'anomalies. Autrement dit, les tâches prétextes choisies doivent induire une mauvaise généralisation du modèle aux anomalies.

Les méthodes de détection d'anomalie par apprentissage non supervisé peuvent être regroupées essentiellement en deux catégories : les méthodes par reconstruction et les méthodes par prédiction.

Les approches basées sur la reconstruction visent à entrainer un modèle pour reconstruire, en sortie, les données d'apprentissage normales reçues en entrée. Une hypothèse de ces approches est que le modèle de reconstruction ne sera pas en mesure de généraliser correctement la reconstruction aux anomalies, c'est-à-dire que les données anormales ne seront pas bien reconstruites.

Contrairement aux méthodes basées sur la reconstruction, les approches par prédiction apprennent aux modèles à prédire des informations manquantes, telles que des parties masquées des données normales afin de mieux apprendre leurs caractéristiques.

Les méthodes basées sur une approche par reconstruction présentent l'inconvénient de parfois reconstruire également correctement les données anormales.

La référence [1] décrit une méthode de détection d'anomalies par reconstruction qui propose un apprentissage de la distribution des données à l'aide d'un auto-encodeur à hypothèses multiples. En outre, le modèle est évalué par un discriminateur, qui empêche que le générateur produise des prédictions invraisemblables. Les auto-encodeurs présentent l'inconvénient d'être capables de reconstruire des caractéristiques anormales à cause de leurs capacités d'extrapolation. Ainsi, ils induisent un taux de non détection non négligeable puisque certaines anomalies vont être détectées comme correspondant à des comportements normaux.

Les méthodes basées sur une approche par prédiction prédisent en général mal les anomalies du fait d'un entrainement réalisé uniquement sur des données normales et que l'information à prédire n'existe pas dans la donnée d'entrée. Cependant, ces méthodes s'adaptent moins bien aux données normales car l'information manquante à prédire n'est pas présente dans les données normales ce qui peut engendrer des difficultés de prédiction.

La plupart des méthodes de détection d'anomalies par prédiction sont basées sur l'apprentissage d'une seule prédiction ce qui présente l'inconvénient de ne pas prendre en compte la diversité de la normalité. En effet, une unique prédiction ne permet souvent pas de caractériser la diversité d'un comportement dit normal. Par exemple, si on considère un scénario simple d'une caméra observant un véhicule se déplaçant sur une route et arrivant à une intersection avec trois possibilités : tourner à droite, aller tout droit ou tourner à gauche, ces trois états futurs possibles peuvent tous être qualifiés de « normaux ». Dans un tel scénario, un modèle basé sur un seul prédicteur ne pourra prédire les différents états futurs de la trajectoire du véhicule avec une unique prédiction. Au contraire, la prédiction générée correspondra à une moyenne des trois états « normaux » possibles. Si les données normales ne sont pas correctement prédites par un tel modèle, alors il ne pourra pas non plus détecter les anomalies par comparaison.

Une solution à ce problème consiste à concevoir un modèle à prédictions multiples afin de prédire tous les états « normaux » d'une donnée.

La référence [2] décrit une méthode de détection d'anomalies par prédiction qui propose d'entrainer un modèle à produire plusieurs prédictions différentes d'une même donnée masquée. L'apprentissage de plusieurs prédictions permet de mieux couvrir la diversité des comportements dits normaux dans les données d'entrées masquées.

La référence [3] décrit une méthode de détection d'anomalies dans une vidéo en s'intéressant à plusieurs tâches grâce à un prédicteur associé.

Les auteurs proposent de prédire de façon stochastique des données vidéo normales à l'aide d'un auto-encodeur variationnel conditionnel. Les prédictions de la méthode s'effectuent de manière stochastique, ce qui fait que les échantillons ne sont pas forcément représentatifs de la distribution apprise, de plus le score d'anomalie considéré ne quantifie pas précisément l'appartenance à la distribution des données normales.

Il existe donc un besoin pour une nouvelle méthode de détection d'anomalies qui pallie aux inconvénients des approches par reconstruction ou par prédiction.

L'invention proposée permet de réunir les avantages des méthodes par reconstruction et des méthodes par prédiction. L'invention consiste à entrainer un modèle multi-prédictions qui ne généralise pas bien les prédictions en présence d'anomalies ce qui améliore le pouvoir de discrimination des anomalies. Par ailleurs, du fait de l'utilisation de plusieurs prédicteurs, le modèle proposé s'adapte mieux aux données normales qu'un modèle à prédiction unique. Les prédictions réalisées sont déterministes ce qui assure la répétabilité des scores d'anomalie données par le système. Les prédictions sont également diversifiées, ce qui permet de couvrir toute la distribution des données normales, chaque prédicteur se spécialisant dans un motif particulier parmi l'ensemble des motifs correspondant à une caractéristique normale.

L'invention a pour objet un procédé, mis en œuvre par ordinateur, d'entrainement d'un modèle de reconstruction de données multimédia représentées par au moins une modalité, le modèle étant composé d'un ensemble de plusieurs prédicteurs différents pour chaque modalité de la donnée, le procédé d'entrainement comprenant les étapes de, pour chaque donnée d'un ensemble de données d'entrainement ne comprenant aucune anomalie,

- pour chaque modalité de la donnée :

  - Masquer au moins une partie de la modalité de la donnée,

  - Entrainer chaque prédicteur de l'ensemble associé à ladite modalité à calculer une prédiction différente de la même donnée masquée, chaque prédicteur étant spécialisé dans une prédiction possible de la donnée masquée parmi différentes alternatives considérées normales dans le contexte desdites données multimédia,,

  - Pour chaque prédicteur, calculer une distance entre la prédiction et une donnée de référence extraite des données d'entrainement,

  - Sélectionner le prédicteur de l'ensemble correspondant à la distance la plus faible,

- Calculer une première fonction de cout égale à la somme sur toutes les modalités, des distances correspondant à chaque prédicteur sélectionné,

• Mettre à jour les paramètres des prédicteurs sélectionnés pour chaque modalité de manière à minimiser la première fonction de cout lors de l'entrainement des prédicteurs.

Dans un mode de réalisation particulier, le procédé comprend en outre,

• pour chaque modalité de la donnée :

 - Sélectionner un sous-ensemble de l'ensemble de prédicteurs qui n'ont pas été optimisés lors d'une itération antérieure de l'entrainement,

 - Calculer la somme des distances entre les prédictions respectives fournies par les prédicteurs dudit sous-ensemble et la donnée de référence,

• Calculer une seconde fonction de cout égale à la somme desdites distances pour toutes les modalités et modifier la première fonction de cout en lui ajoutant la seconde fonction de cout pondérée par un coefficient de pondération,

• Mettre à jour les paramètres du prédicteur qui fournit la prédiction la plus proche de la donnée de référence et des prédicteurs dudit sous-ensemble pour chaque modalité de manière à minimiser la première fonction de cout modifiée.

Selon un aspect particulier de l'invention :

• les données multimedia sont représentées, selon une modalité de base, par une séquence temporelle d'images successives,

• L'étape de masquer au moins une partie de la modalité de base comprend l'application d'un masque spatial prédéfini à chaque image de la séquence de manière à masquer au moins une zone de l'image,

• La donnée de référence correspond à une image successive dans la séquence temporelle par rapport à l'image courante fournie en entrée du modèle,

• Chaque prédicteur est entrainé à prédire ladite image successive à partir de l'image courante masquée au moyen dudit masque.

Selon un aspect particulier de l'invention :

• Les données multimedia sont en outre représentées, selon une modalité supplémentaire, par une séquence de flux optique,

• L'étape de masquer au moins une partie de la modalité supplémentaire comprend le masquage de l'intégralité du flux optique,

• La donnée de référence est le flux optique,

• Chaque prédicteur est entrainé à prédire le flux optique à partir de l'image courante masquée selon la modalité de base.

Selon un aspect particulier de l'invention :

• Les données multimedia sont en outre représentées, selon une modalité supplémentaire, par une séquence comprenant, pour chaque image, un ensemble de classes d'objets détectés dans l'image,

• L'étape de masquer au moins une partie de la modalité supplémentaire comprend le masquage de l'intégralité de la séquence de classes d'objets,

• La donnée de référence est la séquence de classes d'objets,

• Chaque prédicteur est entrainé à prédire la séquence de classes d'objets à partir de l'image courante masquée selon la modalité de base.

Selon un aspect particulier de l'invention :

• Les données multimedia sont en outre représentées, selon une modalité supplémentaire, par une séquence audio synchronisée avec la séquence d'images,

• L'étape de masquer au moins une partie de la modalité supplémentaire comprend la suppression d'au moins une partie de la séquence audio,

• La donnée de référence est la séquence audio,

• Chaque prédicteur est entrainé à prédire la séquence audio à partir de l'image courante masquée selon la modalité de base.

Selon un aspect particulier de l'invention :

• les données multimedia sont représentées, selon une modalité de base, par un ensemble d'images,

• L'étape de masquer au moins une partie de la modalité de base comprend l'application d'un masque spatial prédéfini à chaque image de manière à masquer au moins une zone de l'image,

• La donnée de référence correspond à l'image courante fournie en entrée du modèle mais non masquée,

• Chaque prédicteur est entrainé à prédire ladite image courante à partir de l'image courante masquée au moyen dudit masque.

Selon un aspect particulier de l'invention :

- Les données multimedia sont en outre représentées, selon une seconde modalité, par un ensemble d'images multispectrales,

- L'étape de masquer au moins une partie de la seconde modalité comprend la suppression d'images à au moins une longueur d'onde donnée,

- La donnée de référence est l'ensemble d'images multispectrales,

- Chaque prédicteur est entrainé à prédire une image multispectrale à partir de l'image courante masquée selon la modalité de base.

Selon un aspect particulier de l'invention, le modèle comprend :

- un premier réseau de neurones projecteur recevant en entrée une donnée masquée et entrainé à transformer l'entrée en une représentation latente ,

- un réseau de neurones récurrent entrainé à produire une suite d'états, de manière récurrente, l'état initial étant égal à la représentation latente,

- plusieurs réseaux de neurones prédicteurs chacun correspondant à une modalité, chaque réseau prédicteur recevant en entrée la donnée masquée et un état fourni par le réseau récurrent, le nombre d'états générés par le réseau récurrent étant égal au nombre de prédicteurs pour une modalité.

L'invention a aussi pour objet un procédé, mis en œuvre par ordinateur, de détection d'anomalies dans un ensemble de données multimedia ayant au moins une modalité, le procédé comprenant les étapes de :

- Exécuter, pour ledit ensemble de données, le modèle d'apprentissage automatique entrainé au moyen du procédé d'entrainement selon l'invention, le modèle recevant en entrée les données masquées au moyen de masques identiques à ceux utilisés pour l'entrainement dudit modèle et produisant en sortie plusieurs prédictions,

- Calculer la première fonction de cout à partir des prédictions générées par le modèle,

- Calculer un score d'anomalie à partir d'une distance entre la première fonction de cout et une valeur représentative de la première fonction de cout pour un ensemble de données ne comprenant aucune anomalie,

- Comparer le score d'anomalie à un seuil de détection prédéterminé et en déduire la présence ou l'absence d'anomalies dans les données.

L'invention a aussi pour objet un programme d'ordinateur comprenant des instructions de code pour la mise en œuvre de l'invention ainsi qu'un support **d'enregistrement** lisible par ordinateur sur lequel est enregistré le programme d'ordinateur selon l'invention.

D'autres caractéristiques et avantages de la présente invention apparaîtront mieux à la lecture de la description qui suit en relation aux dessins annexés suivants.

[Fig. 1] représente un schéma d'un premier exemple d'architecture d'un modèle d'apprentissage automatique multi-prédictions selon un mode de réalisation de l'invention,

[Fig. 2] représente un organigramme détaillant les étapes d'un procédé d'entrainement d'un modèle de détection d'anomalies selon un mode de réalisation de l'invention,

[Fig. 3] représente un schéma d'un second exemple d'architecture d'un modèle multi-prédictions apte à être entrainé au moyen du procédé de la figure 2,

[Fig. 4] illustre une étape de rétropropagation du gradient pour mettre à jours les paramètres du modèle de la figure 3,

[Fig. 5] illustre le fonctionnement de la rétropropagation du gradient pour un modèle prenant en compte trois modalités distinctes des données d'entrée,

[Fig. 6] représente un exemple de modèle d'apprentissage automatique pour implémenter les différents réseaux de l'exemple de la figure 3.

[Fig. 7] représente un organigramme détaillant les étapes d'un procédé de détection d'anomalies à partir du modèle entrainé selon le procédé de la figure 2,

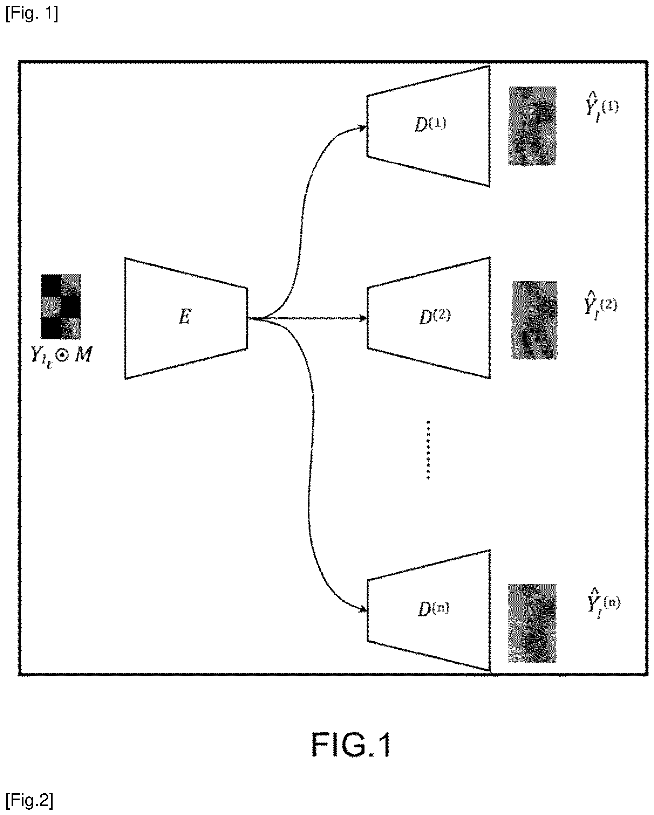

La figure 1 représente schématiquement un exemple de modèle d'apprentissage automatique multi-prédictions selon un mode de réalisation de l'invention.

Le modèle reçoit en entrée des données masquées selon un masque M prédéfini. Il comporte un premier réseau encodeur E apte à convertir les données d'entrée masquées en une représentation latente et plusieurs réseaux prédicteurs $D^{(1)}$, $D^{(2)}$... $D^{(n)}$ qui sont entrainés pour déterminer chacun une prédiction possible de la donnée originale à partir de la donnée masquée.

De façon plus générale, les n prédictions peuvent être générées par n réseaux prédicteurs distincts ou par un unique réseau apte à produire n prédictions distinctes.

Le modèle de la figure 1 est entrainé en utilisant des données d'entrainement dites « normales », c'est-à-dire qui ne comportent aucune anomalie dans le contexte applicatif visé. Par exemple, si l'application visée consiste en la détection de défauts sur des pièces en cours de fabrication, les données d'entrainement ne comportent que des images de pièces n'ayant aucun défaut.

Si l'application visée consiste en la détection de comportements anormaux dans des vidéos de surveillance, les données d'entrainement ne comportent que des images de comportements normaux dans le contexte de la zone surveillée.

Ainsi, le modèle de la figure 1 est entrainé à générer différentes prédictions des parties masquées des données d'entrée, toutes les prédictions étant censées correspondre à des données normales. Une fois le modèle entrainé il permet ainsi de détecter des anomalies car si une anomalie est masquée, le modèle ne va pas reconstruire l'anomalie mais au contraire prédire une reconstruction correspondant à un comportement normal. En comparant les prédictions avec les données réelles, il est donc possible de détecter une anomalie lorsque les prédictions s'écartent des données.

L'utilisation de plusieurs prédicteurs différents permet un entrainement optimal au sens où le modèle ne va pas simplement apprendre à générer une prédiction correspondant à une moyenne de toutes les reconstructions possibles (crédibles) mais au contraire, chaque prédicteur va se spécialiser dans un type de reconstruction possible.

Par exemple, dans le cas d'une image d'une voiture à un carrefour comprenant plusieurs routes possibles, chaque prédicteur va se spécialiser dans la prédiction d'une trajectoire de la voiture vers l'une des routes. Dans ce contexte, toutes ces prédictions correspondent à un comportement normal possible de la voiture. A l'inverse, une voiture circulant entre deux routes (sur un trottoir ou plus généralement une zone ne correspondant pas à une route) correspond à un comportement anormal et donc à une anomalie dans ce contexte.

De façon générale, l'invention s'applique à tout type de données multimedia représentées par au moins une modalité. Par exemple, elle s'applique à des séquences vidéos, des images fixes, des séquences audio, des images RGB ou multispectrales ou une combinaison de ces différents media.

Par la suite, l'invention est décrite pour des données correspondant à des séquences vidéo, mais elle est généralisable aux autres types de données précités.

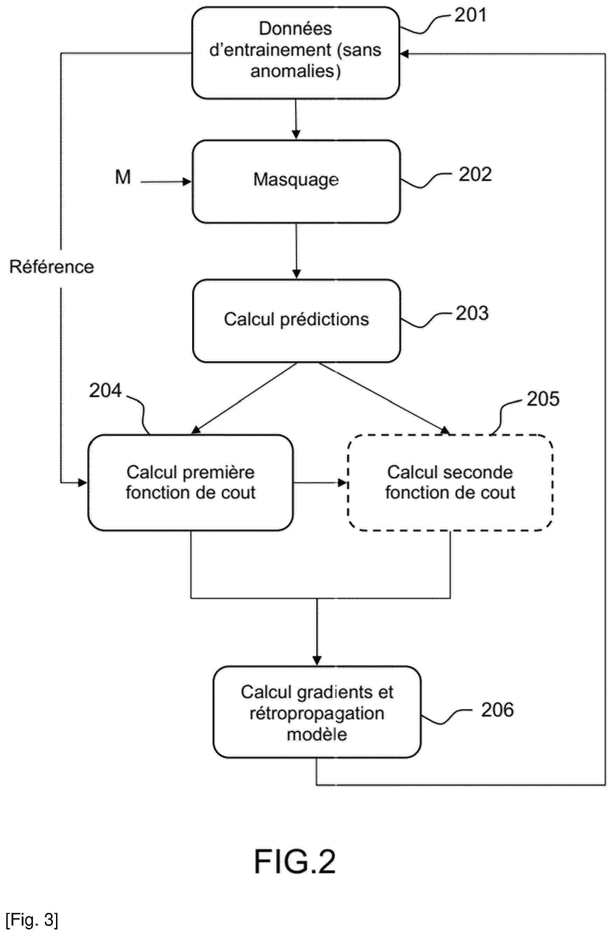

La figure 2 schématise sur un organigramme les étapes de mise en œuvre d'un procédé d'entrainement du modèle de la figure 1 selon un mode de réalisation de l'invention.

L'entrainement est réalisé à partir de données d'entrainement 201 qui ne comportent pas d'anomalies de manière à entrainer le modèle à reconstruire des données dites « normales » au sens où elles ne contiennent aucune anomalie. Ainsi, le modèle est entrainé à reconstruire des données « normales » partiellement masquées.

A l'étape 202, les données d'entrainement sont masquées partiellement au moyen d'un masque prédéfini M. L'étape de masquage 202 peut prendre différentes formes. Elle consiste à masquer ou altérer au moins une partie d'au moins une modalité de la donnée. Plus précisément, si les données d'entrée sont représentées par plusieurs modalités, chacune des modalités peut être masquée totalement ou partiellement à la limite près qu'au moins une modalité doit être masquée uniquement partiellement et ce afin de fournir un minimum d'informations en entrée du modèle. Des exemples de modalités différentes seront explicités par la suite.

Par exemple, dans le cas d'une séquence d'images, l'étape de masquage 202 peut consister à masquer une ou plusieurs zones de chaque image selon un masque spatial M prédéfini. Le masque peut être uniquement spatial ou spatio-temporel auquel cas il dépend également de l'indice temporel de l'image dans la séquence. L'étape de masquage peut consister à supprimer entièrement une zone d'une image ou à appliquer un bruit, par exemple un bruit blanc, à certaines zones d'une image.

Les données masquées sont ensuite fournies en entrée du modèle à entrainer. A l'étape 203, les différentes prédictions de la donnée originale sont calculées à partir des paramètres du modèle et de la donnée d'entrée masquée. Selon le mode de réalisation choisi, les prédictions visent à prédire l'image courante masquée ou une image future dans la séquence vidéo, par exemple l'image suivant l'image masquée dans la séquence.

Le modèle fournit donc n prédictions $\hat{Y}^{(1)}$, ..., $\hat{Y}^{(n)}$ puis à l'étape 204 on calcule une première fonction de cout ou fonction de perte $L_{NN}(Y)$. La fonction de cout choisie consiste à sélectionner, parmi les n prédictions, celle qui est la plus proche d'une référence $I_{ref}$ correspondant à la donnée originale et à calculer l'erreur entre cette prédiction sélectionnée et la référence. Par exemple, si le modèle vise à prédire une image $I_{t+1}$ à l'instant t+1 à partir d'une image $I_t$ à l'instant t masquée, alors la référence est l'image originale $I_{t+1}$. Alternativement si le modèle vise à prédire directement l'image courante $I_t$ alors la référence est l'image originale It.

La première fonction de cout est ainsi donnée par la relation suivante :

$$L_{NN}(Y) = \min_{k\in[\![1,n]\!]} \left\| \hat{Y}^{(k)} - Y_{ref} \right\| \quad (1)$$

Y désigne une représentation des données selon une modalité. Par exemple, $\hat{Y}^{(k)}$ est une prédiction d'une image $I_{t+1}$ et $Y_{ref}$ est l'image originale $I_{t+1}$.

La fonction de cout $L_{NN}(Y)$ peut être calculée pour une ou plusieurs modalités des données comme cela sera illustré par la suite.

Cette première fonction de cout vise à encourager la diversité des prédictions via la sélection, à chaque itération de la prédiction la plus proche de la référence.

A l'étape 206, un algorithme de rétropropagation basé sur un calcul de gradient est appliqué de sorte à mettre à jour les paramètres du modèle pour minimiser la première fonction de cout. A ce stade, seuls les paramètres du prédicteur d'indice k sélectionné pour calculer la fonction de cout sont optimisés avec les paramètres de l'encodeur E lors de la rétropropagation. Les prédicteurs non sélectionnés ne sont pas optimisés. Autrement dit, pour chaque modalité, seul le prédicteur le plus proche de la donnée de référence est optimisé.

Dans une variante de réalisation, une seconde fonction de cout est calculée à l'étape 205 via la relation suivante :

$$L_{NP}(Y) = \sum_{k \in U_T} \left\| \hat{Y}^{(k)} - Y_{ref} \right\| \quad (2)$$

$U_T$ est l'ensemble des prédicteurs qui n'ont pas ou peu été sélectionnés pour calculer la première fonction de cout lors d'une itération précédente de l'entrainement. Pour déterminer l'ensemble $U_T$, un seuil de sélection est par exemple fixé en dessous duquel on considère qu'un prédicteur a été peu sélectionné au cours d'une itération.

Plus précisément, l'entrainement est réalisé en plusieurs itérations avec à chaque itération un ensemble de données d'entrainement appelé époque. A l'issue du traitement de la précédente époque, on relève les prédicteurs qui n'ont jamais été sélectionnés pour calculer la première fonction de cout et on calcule la seconde fonction de cout pour ces prédicteurs.

Il est possible que les prédicteurs sélectionnés pour calculer la seconde fonction de cout incluent le prédicteur sélectionné pour calculer la première fonction de cout pour une époque courante.

A l'étape 206, l'algorithme de rétropropagation du gradient est appliqué de sorte à minimiser une combinaison des deux fonctions de cout :$L=L_{NN} + \lambda L_{NP}$ avec $\lambda$ un coefficient de pondération. Préférentiellement, le paramètre $\lambda$ est un nombre positif strictement inférieur à 1, par exemple égal à 0.1 afin de donner plus de poids à la première fonction de cout $L_{NN}$. De cette manière, on optimise (via la première fonction de cout $L_{NN}$) le prédicteur dont la prédiction est la plus proche de la donnée réelle tout en optimisant (via le terme additionnel $\lambda . L_{NP}$) les prédicteurs qui n'ont pas assez participé à l'entrainement à l'époque précédente. Les prédicteurs qui ont assez participé à l'époque précédente mais qui sont trop loin de la donnée réelle ne sont pas optimisés (en effet, pour eux le gradient calculé est sensiblement nul vis-à-vis des deux fonctions de cout $L_{NN}$ et $L_{NP}$).

La rétropropagation est effectuée de sorte à mettre à jour les paramètres du prédicteur sélectionné pour calculer la première fonction de cout et des prédicteurs sélectionnés pour calculer la seconde fonction de cout, ainsi que les paramètres de l'encodeur E commun à l'ensemble des prédicteurs.

L'optimisation de la seconde fonction de cout $L_{NP}$ a pour objectif de permettre l'optimisation de tous les prédicteurs même ceux qui ne sont jamais ou très peu sélectionnés de sorte à favoriser la diversité des prédictions.

Dans une variante de réalisation, le même modèle d'apprentissage automatique peut être optimisé séparément pour réaliser différentes prédictions relatives à différentes modalités des données.

Par exemple, les données d'entrée peuvent être organisées sous la forme d'une modalité principale ou modalité de base et d'une ou plusieurs modalités supplémentaires. Autrement dit, les données d'entrée peuvent être représentées par plusieurs modalités dont on peut faire varier l'importance en fonction des applications.

Une donnée multimodale fait référence à un ensemble d'informations qui combine plusieurs modes ou sources de données différents. Par exemple, pour une séquence audio/vidéo, le son et l'image peuvent être considérés comme deux modalités de cette donnée.

Par exemple, pour une application de détection d'anomalies d'apparence visuelle et de mouvements d'objets présents dans une vidéo, la donnée d'entrée est une séquence d'images que l'on masque partiellement. La modalité de base correspond ici à la séquence d'images. Dans ce scénario, une modalité supplémentaire est, par exemple, une séquence de flot optique calculée sur la séquence d'images, ou une séquence de classes d'objets présents dans chaque image (détectés au moyen d'un détecteur d'objets appliqués à la séquence d'images). Le flot optique est une information qui caractérise le déplacement de chaque pixel d'un objet entre deux images successives. Il permet de caractériser le mouvement des objets au cours du temps dans une séquence vidéo. Les objets détectés dans une séquence vidéo peuvent être également classés en catégories d'objets. Ainsi, chaque image peut être accompagnée d'une information de classes des objets présents dans cette image.

Dans cet exemple d'application, le modèle d'apprentissage automatique peut être entrainé également pour prédire le flot optique à partir des images masquées reçues en entrée, le flot optique étant masqué intégralement, c'est-à-dire supprimé au sens où il n'est pas fourni en entrée du modèle. Dans ce cas, un deuxième ensemble de n prédicteurs est optimisé à partir de la même fonction de cout et de la même procédure d'apprentissage que celle décrite à la figure 2. La seule différence est que les prédictions sont des prédictions du flot optique et sont comparées à une référence qui est le flot optique original.

De la même façon, en remplaçant le flot optique par une séquence de classes d'objets, un troisième ensemble de n prédicteurs peut être optimisé.

L'utilisation de tâches de prédiction intermodales, par exemple la prédiction du flux optique à partir d'une image masquée, permet également de détecter des corrélations anormales qui pourraient ne pas être détectées si les modalités étaient traitées indépendamment.

Le modèle d'apprentissage automatique peut ainsi être optimisé globalement au moyen de la minimisation d'une fonction de cout qui est une combinaison des différentes fonctions de cout calculées pour chaque modalité, cette combinaison est, par exemple, une somme.

L'apprentissage de prédictions selon différentes modalités : spatiales, temporelles, flot optique ou autre permet de mieux caractériser l'hétérogénéité des données normales et de les discriminer par rapport aux données anormales.

Le principe d'apprentissage du modèle multi-prédicteurs pour des données multimodales peut être appliqué à d'autres modalités.

Par exemple, lorsque l'application visée est la détection d'anomalies dans une image fixe, l'entrée du modèle est unimodale et correspond à une image. Les prédictions fournies par le modèle sont des prédictions de l'image courante à partir de l'image masquée spatialement.

Dans le cas où les images sont multispectrales, l'entrée du modèle est multimodale, chaque modalité correspondant à une image à une longueur d'onde ou un intervalle de longueurs d'ondes. Dans ce scénario, une partie des longueurs d'ondes est supprimée en entrée du modèle et les prédicteurs sont entrainés à prédire les images aux longueurs d'ondes supprimées à partir des images aux autres longueurs d'ondes. Par exemple, les longueurs d'ondes supprimées correspondent à l'infrarouge.

Dans un autre exemple d'application, les données sont multimédia et multimodales, elles comprennent à la fois une séquence vidéo et une séquence audio. Dans ce scénario, la séquence audio peut être supprimée en entrée du modèle et les prédicteurs sont entrainés à prédire la séquence audio à partir de la séquence vidéo.

Sans sortir du cadre de l'invention, d'autres données multimodales peuvent être considérées. Un objectif général de l'invention est d'entrainer le modèle à reconstruire des données dites normales à partir de prédictions multiples pour une ou plusieurs modalités des données.

Lorsque les données sont multimodales, on peut définir une modalité de base qui correspond à la modalité selon laquelle les données sont fournies en entrée du modèle, partiellement masquée, les modalités supplémentaires étant, par exemple, totalement masquées.

quées.

On décrit à présent un exemple particulier de réalisation de l'invention qui est basé sur des données vidéo et un modèle d'apprentissage particulier.

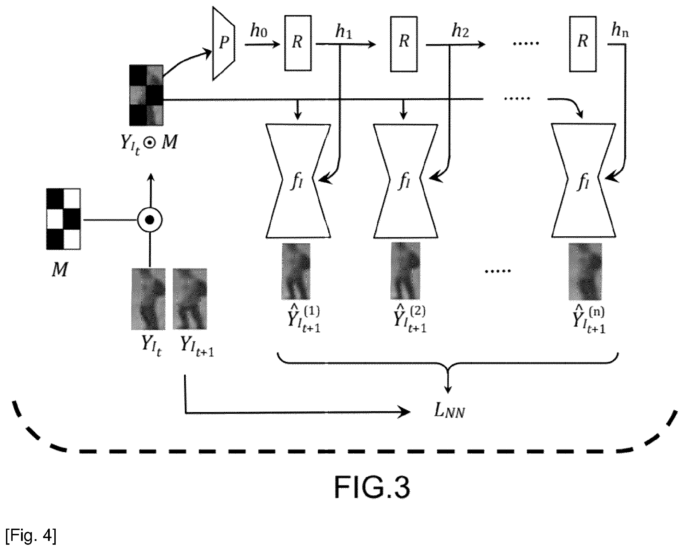

Dans cet exemple illustré à la figure 3, le modèle d'apprentissage automatique comprend un premier réseau projecteur P qui reçoit en entrée chaque image $Y_{It}$ de la séquence vidéo masquée par un masque spatial M. Le réseau projecteur P est entrainé pour convertir son entrée en une représentation latente dans un autre espace de projection permettant de caractériser l'information contenue dans l'entrée. Sur cet exemple, les données d'entrée sont représentées par une seule modalité qui est la séquence d'image I.

Le modèle comporte également un réseau de neurones récurrents R qui est entrainé à produire une suite d'états $h_i$ de manière récurrente, l'état initial $h_0$ étant égal à la représentation latente fournie en sortie du réseau projecteur P.

La succession d'états $h_i$ pour i variant de 1 à n permet de caractériser selon n représentations différentes les données d'entrée.

Chaque état $h_i$ de sortie du réseau récurrent R est fourni, avec l'image masquée, à un réseau prédicteur $f_I$ pour fournir en sortie n prédictions différentes de l'image suivante $Y_{It+1}$.

Comme cela sera décrit plus loin, lorsque plusieurs modalités des données sont considérées, un réseau prédicteur différent est utilisé pour chacune des modalités. Par exemple si m modalités sont considérées, m réseaux prédicteurs $\{f_T\}$ génèrent donc m*n prédictions, soit n prédictions différentes pour chacune des m modalités.

La fonction de coût est calculée de la façon décrite ci-dessus en comparant les prédictions générées par le réseau prédicteur à l'image réelle $Y_{It+1}$ de la séquence.

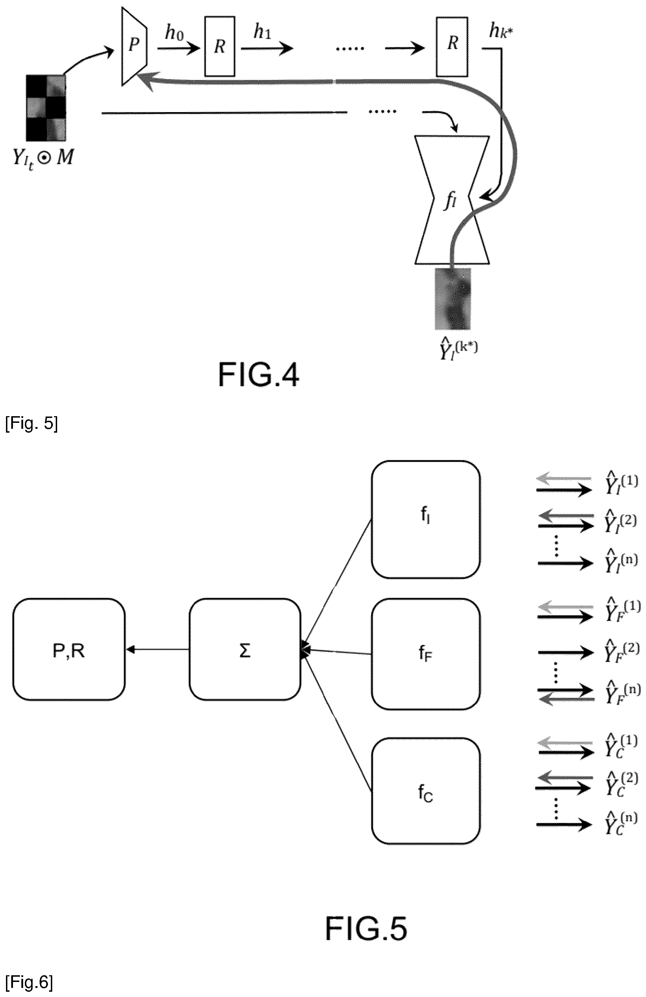

La figure 4 illustre un exemple d'application de l'algorithme de rétropropagation du gradient lorsque la prédiction $\hat{Y}^{(k^*)}$ est sélectionnée comme la plus proche de l'image réelle. Le jeu de paramètres du réseau prédicteur $f_I$ correspondant au prédicteur de rang k* est mis à jour ainsi que les paramètres du réseau récurrent et du réseau projecteur P.

Dans une variante de réalisation de l'exemple de la figure 3, les données sont multimodales et la séquence vidéo est accompagnée d'un flot optique désigné $Y_F$ et/ou d'un vecteur de classes d'objets $Y_C$ qui indique, pour chaque image, les classes des objets présents dans l'image.

Cette variante est représentée à la figure 5 qui illustre, sur un schéma, le fonctionnement de l'algorithme de rétropropagation du gradient dans le cas où trois modalités I (séquence d'images), F (séquence de flots optiques), C (séquence de vecteurs de classes d'objet) des données sont exploitées.

Dans cette variante, le modèle est entrainé pour les trois modalités I,F,C de sorte que n*3 prédictions différentes sont obtenues par les trois prédicteurs correspondant aux trois modalités des données. Chaque prédicteur possède son jeu de paramètres spécifique.

Ainsi, pour chaque modalité de la donnée, le modèle fourni un nombre n de prédictions qui peut être différent pour chaque modalité. Ces n prédictions peuvent être générées par n réseaux prédicteurs distincts ou par un unique réseau à n branches.

Lors de la phase de rétropropagation du gradient, les paramètres de chaque réseau prédicteur $f_I$, $f_F$, $f_C$ sont optimisés à partir de la somme des fonctions de couts respectives calculées pour chaque modalité, c'est-à-dire la somme

$$L = \sum_{T=I,C,F} L_{NN}^T + \lambda L_{NP}^T$$

Les gradients calculés impactent les paramètres de chaque réseau prédicteur $f_I$, $f_F$, $f_C$ selon les variations respectives des fonctions de couts calculées pour chacune des modalités. Ainsi, les paramètres de chaque réseau prédicteur sont mis à jour indépendamment.

Sur l'exemple de la figure 5, le prédicteur numéro 2 est retenu pour calculer la première fonction de cout pour la première modalité I, le prédicteur numéro n est retenu pour calculer la première fonction de cout pour la deuxième modalité F et le prédicteur numéro 2 est retenu pour calculer la première fonction de cout pour la troisième modalité C.

Le prédicteur numéro 1 est retenu pour calculer la seconde fonction de cout pour chacune des modalités I,F,C.

Cet exemple est donné à titre purement illustratif étant entendu que les prédicteurs retenus peuvent être différents ou identiques pour chacune des modalités et chacune des fonctions de couts. Ils sont déterminés indépendamment pour chaque modalité selon les critères relatifs aux calculs des fonctions de cout décrits précédemment.

Les gradients calculés sont rétropropagés dans chacun des trois réseaux prédicteurs $f_I$, $f_F$, $f_C$ jusqu'à leur couche d'entrée puis les résultats sont sommés via un sommateur $\Sigma$ avant d'être propagés vers l'ensemble constitué du réseau projecteur P et du réseau récurrent R qui est lui commun à toutes les modalités.

Autrement dit, la totalité du modèle est affecté par la somme des trois fonctions de couts calculées pour chaque modalité, mais en pratique, chaque partie respective du modèle (prédicteurs $f_T$, réseau récurrent R et projecteur P) est affectée différemment. La fonction de cout globale est calculée comme la somme des fonctions de couts pour chaque modalité, elle-même étant une somme pondérée de deux fonctions de couts $L_{NN}$ et $L_{NP}$. Celle-ci induit, dans les différents prédicteurs $f_T$, des gradients de rétropropagation d'amplitude différente selon le rôle que jouent les paramètres de ces prédicteurs pour le calcul des prédictions. Autrement dit, chaque réseau prédicteur $f_T$ n'est optimisé que par le gradient généré par la fonction de cout calculée pour la modalité correspondante. Les réseaux P et R, reçoivent au final la somme des gradients provenant des trois réseaux prédicteurs.

Un avantage à l'utilisation d'un réseau récurrent R est que cela permet d'augmenter le nombre de prédicteurs sans pour autant augmenter la taille du modèle en termes de nombre de paramètres ce qui réduit les exigences sur les capacités calculatoires de la machine qui exécute l'algorithme.

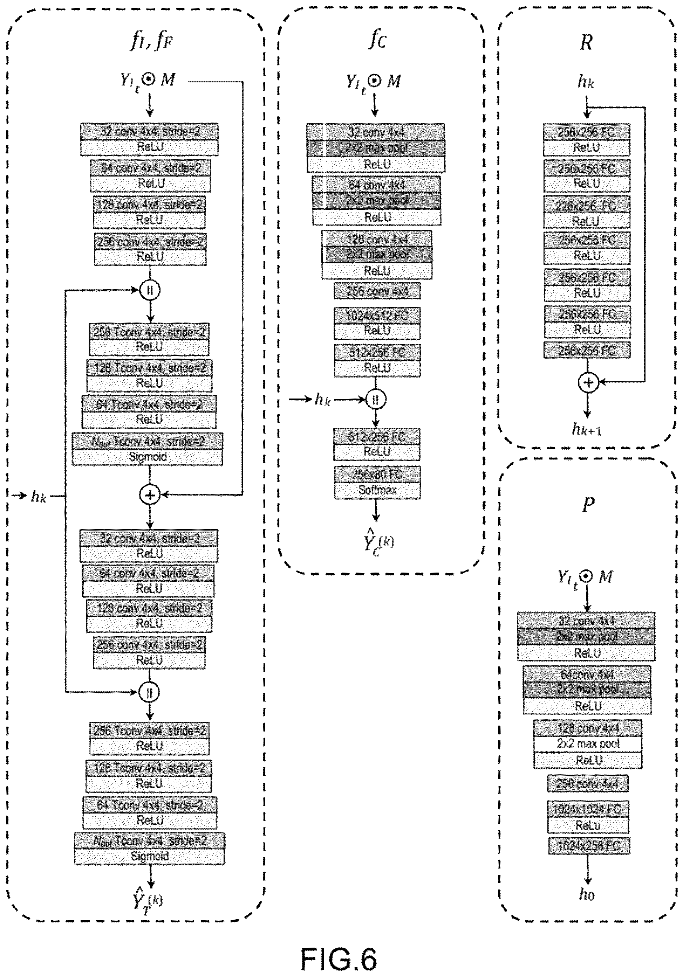

La figure 6 illustre un exemple d'architecture possible pour le réseau projecteur P, le réseau récurrent R et les trois réseaux prédicteurs $f_I$,$f_F$ et $f_C$ correspondants à la modalité de base (la séquence d'images), et les deux modalités secondaires (flot optique F et classe d'objets C).

Sur cet exemple, le même réseau prédicteur est utilisé pour la modalité principale et le flot optique et un réseau prédicteur d'architecture différente est utilisé pour la classe d'objets. Cet exemple n'est pas limitatif, il est possible d'utiliser le même réseau prédicteur pour toutes les modalités avec des jeux de paramètres différents pour chaque modalité ou bien des réseaux prédicteurs différents pour chaque modalité ou encore une combinaison des deux approches.

Sur l'exemple de la figure 6, le réseau projecteur P est composé d'une série de quatre couches de convolution *conv,* trois couches de maxpooling *max pool,* quatre couches d'activation implémentant une fonction d'activation ReLU et deux couches de convolution totalement connectées FC arrangées dans l'ordre indiqué sur la figure 6.

Le réseau récurrent R est composé de 7 couches de convolution totalement connectées (de dimensions identiques) FC alternées par une couche d'activation implémentant une fonction d'activation ReLU. L'entrée est additionnée à la sortie via une connexion résiduelle.

Le réseau prédicteur $f_I$,$f_F$ est composé de deux auto-encodeurs empilés. Les deux auto-encodeurs sont identiques et composés chacun d'un encodeur à quatre couches de convolution conv et quatre couches d'activation ReLU puis d'un décodeur implémentant les mêmes couches dans l'ordre inverse. La dernière couche d'activation du décoder implémente une fonction d'activation sigmoide.

L'entrée est additionnée à la sortie du premier auto-encodeur via une connexion résiduelle. L'état $h_k$ fourni par le réseau récurrent est concaténé aux sorties de chaque encodeur.

Aussi, la dernière couche de chaque décodeur peut être adaptée pour chacune des deux modalités I et F, en particulier la dimension de la couche de convolution peut varier selon la modalité.

Le réseau prédicteur $f_C$ comprend un encodeur constitué de quatre couches de convolution conv, trois couches de maxpooling *max pool,* cinq couches d'activation implémentant une fonction d'activation ReLU et deux couches de convolution totalement connectées FC arrangées dans l'ordre indiqué sur la figure 6.

La sortie de l'encodeur est concaténée à l'état $h_k$ fourni par le réseau récurrent et est fournie en entrée d'un décodeur composé de deux couches de convolution totalement connectées, d'une couche d'activation ReLU et d'une couche d'activation implémentant la fonction d'activation Softmax.

Les exemples d'architecture donnés à la figure 6 sont illustratifs et non limitatifs.

Une fois le modèle d'apprentissage automatique entrainé à reconstruire des données « normales » via plusieurs prédictions crédibles, il peut être utilisé pour détecter des anomalies dans un nouveau jeu de données qui peut comprendre des anomalies.

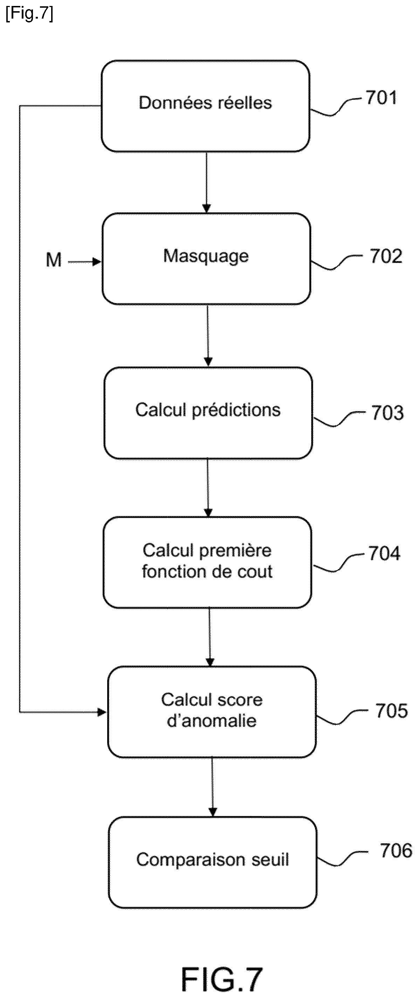

Pour cela, un procédé de détection d'anomalies impliquant la mise en œuvre du modèle décrit ci-dessus est proposé à la figure 7.

Le procédé est appliqué à des données 701 de même nature et de mêmes modalités que celles utilisées pour l'entrainement à la différence qu'elles peuvent à présent comporter des anomalies.

A l'étape 702, les données sont masquées au moyen de la même procédure de masquage qu'à l'étape 202 de l'entrainement puis les données masquées sont fournis en entrée du modèle préalablement entrainé.

A l'étape 703, le modèle calcule plusieurs prédictions de la même façon qu'à l'étape 203 de l'entrainement.

A l'étape 704 on calcule uniquement la première fonction de cout $L_{NN}(Y)$ au moyen de l'équation (1) en sélectionnant la prédiction la plus proche de la donnée de référence. La fonction de cout est calculée en prenant en compte une ou plusieurs modalités des données disponibles.

Enfin, on calcule à l'étape 705 un score d'anomalie qui est basé sur l'écart entre la fonction de cout $L_{NN}$($Y$) et une valeur caractéristique de la moyenne de cette fonction de cout calculée lors de l'entrainement. En effet, si les données d'entrée 701 ne comportent aucune anomalie, les prédicteurs vont reconstruire correctement les parties masquées des données et la fonction de cout calculée sera proche de la moyenne de cette fonction calculée lors de l'entrainement. A l'inverse, si les données d'entrée comportent une anomalie dans les zones masquées, les prédicteurs ne vont pas reconstruire cette anomalie et la fonction de cout calculée à l'étape 704 présentera une valeur significativement différente de celle calculée lors de l'entrainement.

Un exemple de formule de score d'anomalie est donné à la relation (3) :

$$S(Y) = \sum_{T \in T_{AM}} w_T \frac{L_{NN}^{(T)}(Y_T) - \mu_T}{\sigma_T} \ (3)$$

$T_{AM} = \{I, F, C\}$ est l'ensemble des modalités que parcourt la variable T $L_{NN}^{(T)}(Y_T)$ est la fonction de cout calculée pour chaque modalité.

$\mu_T$ et $\sigma_T$ sont respectivement la moyenne et l'écart type de la même fonction de cout calculée lors de l'entrainement pour des données d'entrainement qui ne contiennent aucune anomalie.

$w_T$ est un coefficient de pondération qui permet de donner des poids différents à chaque modalité.

La formule de score d'anomalie peut être remplacée pour tout autre métrique permettant de mesurer l'écart entre la fonction de cout calculée à l'étape 604 et une valeur représentative de la fonction de cout calculée sur des données d'entrainement sans anomalies.

A l'étape 706, le score d'anomalie est comparé à un seuil de détection pour en déduire la présence ou l'absence d'anomalies dans les données d'entrée.

L'invention peut être mise en œuvre en tant que programme d'ordinateur comportant des instructions pour son exécution. Le programme d'ordinateur peut être enregistré sur un support d'enregistrement lisible par un processeur.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués (*"Cloud computing"),* éventuellement selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

L'invention peut être implémentée sur un dispositif de calcul basé, par exemple, sur un processeur embarqué. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »). Le dispositif de calcul peut utiliser un ou plusieurs circuits électroniques dédiés ou un circuit à usage général. La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel).

L'invention permet d'améliorer à la fois les approches d'apprentissage par reconstruction et par prédiction en utilisant un modèle multi-prédictions entrainé pour reconstruire des données normales masquées.

Par ailleurs, l'utilisation de plusieurs prédicteurs entrainés pour réaliser différentes tâches prétextes pour différentes modalités de données multimodales permet de mieux capturer la diversité du caractère « normal » des données d'entrainement. En effet, l'apprentissage de prédictions selon différentes modalités : spatiales, temporelles, flot optique ou autre permet de mieux caractériser et discriminer les différents contenus crédibles de données normales.

Références

[1] Duc Tam Nguyen, Zhongyu Lou, Michael Klar, Thomas Brox. Anomaly Detection With Multiple-Hypotheses Predictions. In ICML, 2018
[2] Zhian Liu, Yongwei Nie, Chengjiang Long, Qing Zhang, and Guiqing Li. A hybrid video anomaly detection framework via memory-augmented flow reconstruction and flow-guided frame prediction. In ICCV, 2021
[3] Mariana-Iuliana Georgescu et al.: Anomaly Detection in Video via Self-Supervised and Multi-Task Learning,ARXIV.ORG, 2021

Revendications

1. Procédé, mis en œuvre par ordinateur, d'entrainement d'un modèle de reconstruction de données multimédia représentées par au moins une modalité (201), le modèle étant composé d'un ensemble de plusieurs prédicteurs différents pour chaque modalité de la donnée, le procédé d'entrainement comprenant les étapes de, pour chaque donnée d'un ensemble de données d'entrainement ne comprenant aucune anomalie,

- pour chaque modalité de la donnée :

• Masquer (202) au moins une partie de la modalité de la donnée,
• Entrainer chaque prédicteur de l'ensemble associé à ladite modalité à calculer (203) une prédiction différente de la même donnée masquée, chaque prédicteur étant spécialisé dans une prédiction possible de la donnée masquée parmi différentes alternatives considérées normales dans le contexte desdites données multimédia,
• Pour chaque prédicteur, calculer une distance entre la prédiction et une donnée de référence extraite des données d'entrainement,
• Sélectionner le prédicteur de l'ensemble correspondant à la distance la plus faible,

- Calculer (204) une première fonction de cout égale à la somme, sur toutes les modalités, des distances correspondant à chaque prédicteur sélectionné,
- Mettre à jour (206) les paramètres des prédicteurs sélectionnés pour chaque modalité de manière à minimiser la première fonction de cout lors de l'entrainement des prédicteurs.

2. Procédé d'entrainement d'un modèle de détection d'anomalies selon la revendication 1 comprenant en outre,

- pour chaque modalité de la donnée :

• Sélectionner un sous-ensemble de l'ensemble de prédicteurs qui n'ont pas été optimisés lors d'une itération antérieure de l'entrainement,
• Calculer la somme des distances entre les prédictions respectives fournies par les prédicteurs dudit sous-ensemble et la donnée de référence,

- Calculer (205) une seconde fonction de cout égale à la somme desdites distances pour toutes les modalités et modifier la première fonction de cout en lui ajoutant la seconde fonction de cout pondérée par un coefficient de pondération,
- Mettre à jour (206) les paramètres du prédicteur qui fournit la prédiction la plus proche de la donnée de référence et des prédicteurs dudit sous-ensemble pour chaque modalité de manière à minimiser la première fonction de cout modifiée.

3. Procédé d'entrainement d'un modèle de détection d'anomalies selon l'une quelconque des revendications précédentes dans lequel :

- les données multimedia (201) sont représentées, selon une modalité de base, par une séquence temporelle d'images successives,
- L'étape de masquer (202) au moins une partie de la modalité de base comprend l'application d'un masque spatial prédéfini à chaque image de la séquence de manière à masquer au moins une zone de l'image,
- La donnée de référence correspond à une image successive dans la séquence temporelle par rapport à l'image courante fournie en entrée du modèle,
- Chaque prédicteur est entrainé à prédire ladite image successive à partir de l'image courante masquée au moyen dudit masque.

4. Procédé d'entrainement d'un modèle de détection d'anomalies selon la revendication 3 dans lequel :

- Les données multimedia (201) sont en outre représentées, selon une modalité supplémentaire, par une séquence de flux optique,
- L'étape de masquer (202) au moins une partie de la modalité supplémentaire comprend le masquage de l'intégralité du flux optique,
- La donnée de référence est le flux optique,
- Chaque prédicteur est entrainé à prédire le flux optique à partir de l'image courante masquée selon la modalité de base.

5. Procédé d'entrainement d'un modèle de détection d'anomalies selon l'une quelconque des revendications 3 ou 4 dans lequel :

- Les données multimedia (201) sont en outre représentées, selon une modalité supplémentaire, par une séquence comprenant, pour chaque image, un ensemble de classes d'objets détectés dans l'image,
- L'étape de masquer (202) au moins une partie de la modalité supplémentaire comprend le masquage de l'intégralité de la séquence de classes d'objets,
- La donnée de référence est la séquence de classes d'objets,
- Chaque prédicteur est entrainé à prédire la séquence de classes d'objets à partir de l'image courante masquée selon la modalité de base.

6. Procédé d'entrainement d'un modèle de détection d'anomalies selon l'une quelconque des revendications 3 à 5 :

- Les données multimedia (201) sont en outre représentées, selon une modalité supplémentaire, par une séquence audio synchronisée avec la séquence d'images,
- L'étape de masquer (202) au moins une partie de la modalité supplémentaire comprend la suppression d'au moins une partie de la séquence audio,
- La donnée de référence est la séquence audio,
- Chaque prédicteur est entrainé à prédire la séquence audio à partir de l'image courante masquée selon la modalité de base.

7. Procédé d'entrainement d'un modèle de détection d'anomalies selon l'une quelconque des revendications 1 ou 2 dans lequel :

- les données multimedia (201) sont représentées, selon une modalité de base, par un ensemble d'images,
- L'étape de masquer (202) au moins une partie de la modalité de base comprend l'application d'un masque spatial prédéfini à chaque image de manière à masquer au moins une zone de l'image,
- La donnée de référence correspond à l'image courante fournie en entrée du modèle mais non masquée,
- Chaque prédicteur est entrainé à prédire ladite image courante à partir de l'image courante masquée au moyen dudit masque.

8. Procédé d'entrainement d'un modèle de détection d'anomalies selon la revendication 7 dans lequel :

- Les données multimedia (201) sont en outre représentées, selon une seconde modalité, par un ensemble d'images multispectrales,
- L'étape de masquer (202) au moins une partie de la seconde modalité comprend la suppression d'images à au moins une longueur d'onde donnée,
- La donnée de référence est l'ensemble d'images multispectrales,
- Chaque prédicteur est entrainé à prédire une image multispectrale à partir de l'image courante masquée selon la modalité de base.

9. Procédé d'entrainement d'un modèle de détection d'anomalies selon l'une quelconque des revendications précédentes dans lequel le modèle comprend :

- un premier réseau de neurones projecteur (P) recevant en entrée une donnée masquée et entrainé à transformer l'entrée en une représentation latente ($h_0$),
- un réseau de neurones récurrent (R) entrainé à produire une suite d'états ($h_1 ... h_n$), de manière récurrente, l'état initial ($h_0$) étant égal à la représentation latente,
- plusieurs réseaux de neurones prédicteurs ($f_T$) chacun correspondant à une modalité, chaque réseau prédicteur recevant en entrée la donnée masquée et un état fourni par le réseau récurrent, le nombre d'états générés par le réseau récurrent étant égal au nombre de prédicteurs pour une modalité.

10. Procédé, mis en œuvre par ordinateur, de détection d'anomalies dans un ensemble de données multimedia ayant au moins une modalité, le procédé comprenant les étapes de :

- Exécuter (703), pour ledit ensemble de données, le modèle d'apprentissage automatique entrainé au moyen du procédé d'entrainement selon l'une quelconque des revendications précédentes, le modèle recevant en entrée les données masquées (702) au moyen de masques identiques à ceux utilisés pour l'entrainement dudit modèle et produisant en sortie plusieurs prédictions,
- Calculer (704) la première fonction de cout à partir des prédictions générées par le modèle,
- Calculer (705) un score d'anomalie à partir d'une distance entre la première fonction de cout et une valeur représentative de la première fonction de cout pour un ensemble de données ne comprenant aucune anomalie,
- Comparer (706) le score d'anomalie à un seuil de détection prédéterminé et en déduire la présence ou l'absence d'anomalies dans les données.

11. Programme d'ordinateur comprenant des instructions de code pour la mise en œuvre des procédés selon l'une quelconque des revendications 1 à 10, lorsque ledit programme est exécuté sur un ordinateur.

12. Support d'enregistrement lisible par ordinateur sur lequel est enregistré le programme d'ordinateur selon la revendication 11.

**Patentansprüche**

1. Verfahren, das von einem Computer durchgeführt wird, zum Trainieren eines Modells zur Rekonstruktion von Multimedia-Daten, die durch mindestens eine Modalität (201) dargestellt werden, wobei das Modell sich aus einer Menge von mehreren unterschiedlichen Prädiktoren für jede Datenmodalität zusammensetzt, wobei das Trainingsverfahren für jeden Datensatz einer Trainingsdatenmenge, die keine Anomalie umfasst, die folgenden Schritte umfasst,

- für jede Datenmodalität:

- Maskieren (202) mindestens eines Teils der Datenmodalität;
- Trainieren jedes Prädiktors der Menge, die der Modalität zugeordnet ist, zum Berechnen (203) einer unterschiedlichen Vorhersage des gleichen maskierten Datensatzes, wobei jeder Prädiktor in einer möglichen Vorhersage des maskierten Datensatzes aus unterschiedlichen, im Kontext der Multimedia-Daten als normal betrachteten Alternativen spezialisiert ist,
- für jeden Prädiktor, Berechnen eines Abstands zwischen der Vorhersage und einem aus den Trainingsdaten extrahieren Referenzdatensatz,
- Auswählen des Prädiktors der Menge, der dem geringsten Abstand entspricht,

- Berechnen (204) einer ersten Kostenfunktion, die gleich der Summe, über alle Modalitäten, der Abstände ist, die jedem ausgewählten Prädiktor entsprechen,
- Aktualisieren (206) der Parameter der ausgewählten Prädiktoren für jede Modalität, sodass die erste Kostenfunktion beim Training der Prädiktoren minimiert wird.

2. Verfahren zum Trainieren eines Modells zur Erfassung von Anomalien nach Anspruch 1, weiter umfassend,

- für jede Datenmodalität:

- Auswählen einer Teilmenge der Menge der Prädiktoren, die bei einer vorherigen Iteration des Trainings nicht optimiert wurden,
- Berechnen der Summe der Abstände zwischen den jeweiligen Prädiktoren, die von den Prädiktoren der Teilmenge bereitgestellt werden, und dem Referenzdatensatz,

- Berechnen (205) einer zweiten Kostenfunktion, die gleich der Summe der Abstände für alle Modalitäten ist, und Modifizieren der ersten Kostenfunktion, indem dieser die durch einen Gewichtungskoeffizienten gewichtete zweite Kostenfunktion hinzugefügt wird,
- Aktualisieren (206) der Parameter des Prädiktors, der die nächstgelegene Vorhersage des Referenzdatensatzes bereitstellt, und der Prädiktoren der Teilmenge für jede Modalität, sodass die modifizierte erste Kostenfunktion minimiert wird.

3. Verfahren zum Trainieren eines Modells zur Erfassung von Anomalien nach einem der vorstehenden Ansprüche, wobei:

- die Multimedia-Daten (201) gemäß einer Basismodalität durch eine zeitliche Abfolge von aufeinanderfolgenden Bildern dargestellt werden,
- der Schritt des Maskierens (202) mindestens eines Teils der Basismodalität die Anwendung einer vorgegebenen räumlichen Maske an jedem Bild der Abfolge derart, dass mindestens ein Bereich des Bildes maskiert wird, umfasst,
- der Referenzdatensatz einem nachfolgenden Bild in der zeitlichen Abfolge in Bezug auf das aktuelle Bild, das als Eingabe des Modells bereitgestellt wird, entspricht,
- jeder Prädiktor zum Vorhersagen des nachfolgenden Bildes ausgehend von dem aktuellen Bild trainiert wird, das mithilfe der Maske maskiert wird.

4. Verfahren zum Trainieren eines Modells zur Erfassung von Anomalien nach Anspruch 3, wobei:

- die Multimedia-Daten (201) weiter gemäß einer zusätzlichen Modalität durch eine Abfolge eines optischen Stroms dargestellt werden,
- der Schritt des Maskierens (202) mindestens eines Teils der zusätzlichen Modalität die Maskierung der Gesamtheit des optischen Stroms umfasst,
- der Referenzdatensatz der optische Strom ist,
- jeder Prädiktor zum Vorhersagen des optischen Stroms ausgehend von dem aktuellen Bild trainiert wird, das gemäß der Basismodalität maskiert wird.

5. Verfahren zum Trainieren eines Modells zur Erfassung von Anomalien nach einem der Ansprüche 3 oder 4, wobei:

- die Multimedia-Daten (201) weiter gemäß einer zusätzlichen Modalität durch eine Abfolge dargestellt werden, die für jedes Bild eine Menge von Objektklassen umfasst, die im Bild erfasst werden,
- der Schritt des Maskierens (202) mindestens eines Teils der zusätzlichen Modalität die Maskierung der Gesamtheit der Abfolge von Objektklassen umfasst,
- der Referenzdatensatz die Abfolge von Objektklassen ist,
- jeder Prädiktor zum Vorhersagen der Abfolge von Objektklassen ausgehend von dem aktuellen Bild trainiert wird, das gemäß der Basismodalität maskiert wird.

6. Verfahren zum Trainieren eines Modells zur Erfassung von Anomalien nach einem der Ansprüche 3 bis 5:

- die Multimedia-Daten (201) weiter gemäß einer zusätzlichen Modalität durch eine Abfolge dargestellt werden, die mit der Abfolge von Bildern audiosynchronisiert ist,
- der Schritt des Maskierens (202) mindestens eines Teils der zusätzlichen Modalität die Unterdrückung mindestens eines Teils der Audio-Sequenz umfasst,
- der Referenzdatensatz die Audio-Sequenz ist,
- jeder Prädiktor zum Vorhersagen der Audio-Sequenz ausgehend von dem aktuellen Bild trainiert wird, das gemäß der Basismodalität maskiert wird.

7. Verfahren zum Trainieren eines Modells zur Erfassung von Anomalien nach einem der Ansprüche 1 oder 2, wobei:

- die Multimedia-Daten (201) gemäß einer Basismodalität durch eine Menge von Bildern dargestellt werden,
- der Schritt des Maskierens (202) mindestens eines Teils der Basismodalität die Anwendung einer vorgegebenen räumlichen Maske an jedem Bild derart, dass mindestens ein Bereich des Bildes maskiert wird, umfasst,
- der Referenzdatensatz dem aktuellen Bild entspricht, das als Eingabe des Modells bereitgestellt wird, aber nicht maskiert ist,
- jeder Prädiktor zum Vorhersagen des aktuellen Bildes ausgehend von dem aktuellen Bild trainiert wird, das mithilfe der Maske maskiert wird.

8. Verfahren zum Trainieren eines Modells zur Erfassung von Anomalien nach Anspruch 7, wobei:

- die Multimedia-Daten (201) weiter gemäß einer zweiten Modalität durch eine Menge an multispektralen Bildern dargestellt werden,
- der Schritt des Maskierens (202) mindestens eines Teils der zweiten Modalität die Unterdrückung von Bildern mit mindestens einer gegebenen Wellenlänge umfasst,
- der Referenzdatensatz die Menge der multispektralen Bilder ist,
- jeder Prädiktor zum Vorhersagen eines multispektralen Bildes ausgehend von dem aktuellen Bild trainiert wird, das gemäß der Basismodalität maskiert wird.

9. Verfahren zum Trainieren eines Modells zur Erfassung von Anomalien nach einem der vorstehenden Ansprüche, wobei das Modell umfasst:

- ein erstes neuronales Projektornetz (P), das einen maskierten Datensatz als Eingabe empfängt und dazu trainiert ist, die Eingabe in eine latente Darstellung ($h_0$) umzuwandeln,

- ein rekurrentes neuronales Netz (R), das dazu trainiert ist, eine Folge von Zuständen ($h_1$,... $h_n$) auf rekurrente Weise zu erzeugen, wobei der Anfangszustand ($h_0$) gleich der latenten Darstellung ist,
- mehrere neuronale Prädiktornetze ($f_T$), die jeweils einer Modalität entsprechen, wobei jedes Prädiktornetz als Eingabe den maskierten Datensatz und einen von dem rekurrenten Netz bereitgestellten Zustand empfängt, wobei für eine Modalität die Anzahl der von dem rekurrenten Netz generierten Zustände gleich der Anzahl der Prädiktoren ist.

10. Verfahren, das von einem Computer durchgeführt wird, zur Erfassung von Anomalien in einer Menge von Multimedia-Daten, die mindestens eine Modalität aufweisen, wobei das Verfahren die folgenden Schritte umfasst:

    - Ausführen (703), für die Menge von Daten, des automatischen Trainingsmodells, das mithilfe des Trainingsverfahrens nach einem der vorstehenden Ansprüche trainiert wird, wobei das Modell als Eingabe die Daten empfängt, die mithilfe von Masken maskiert werden (702), die identisch sind zu jenen, die für das Training des Modells verwendet werden, und als Ausgabe mehrere Vorhersagen erzeugt,
    - Berechnen (704) der ersten Kostenfunktion ausgehend von den von dem Modell generierten Vorhersagen,
    - Berechnen (705) einer Anomalie-Punktzahl ausgehend von einem Abstand zwischen der ersten Kostenfunktion und einem für die Kostenfunktion repräsentativen Wert für eine Menge von Daten, die keine Anomalie umfassen;
    - Vergleichen (706) der Anomalie-Punktzahl mit einem vorbestimmten Erfassungsschwellenwert und Folgern auf das Vorliegen oder die Abwesenheit von Anomalien in den Daten.

11. Computerprogramm, das Code-Anweisungen für die Durchführung der Verfahren nach einem der Ansprüche 1 bis 10, wenn das Programm auf einem Computer ausgeführt wird umfasst.

12. Computerlesbares Speichermedium, auf dem das Computerprogramm nach Anspruch 11 gespeichert ist.

**Claims**

1. Computer-implemented method for training a model for reconstructing multimedia data represented by at least one modality (201), the model comprising a set of a plurality of different predictors for each datum modality, the training method comprising the steps of, for each datum of a training dataset containing no anomalies,

    - for each datum modality:

        • masking (202) at least part of the datum modality,
        • training each predictor of the set associated with said modality to compute (203) a different prediction of the same masked datum, each predictor being specialized in one possible prediction of the masked datum among various alternatives considered normal in the context of said multimedia data,
        • for each predictor, computing a distance between the prediction and a reference datum extracted from the training data,
        • selecting the predictor of the set corresponding to the smallest distance,

    - computing (204) a first cost function equal to the sum, over all the modalities, of the distances corresponding to each selected predictor,
    - updating (206) the parameters of the predictors selected for each modality so as to minimize the first cost function during training of the predictors.

2. Method for training an anomaly-detecting model according to claim 1, further comprising,

    - for each datum modality:

        • selecting a subset of the set of predictors that have not been optimized in an earlier iteration of the training,
        • computing the sum of the distances between the respective predictions provided by the predictors of said subset and the reference datum,

    - computing (205) a second cost function equal to the sum of said distances for all the modalities and modifying the first cost function by adding thereto the second cost function weighted by a weighting factor,
    - updating (206) the parameters of the predictor that provides the closest prediction to the reference datum and of the predictors of said subset for each modality so as to minimize the modified first cost function.

3. Method for training an anomaly-detecting model according to any one of the preceding claims, wherein:

    - the multimedia data (201) are represented, in a basic modality, by a temporal sequence of successive images,
- the step of masking (202) at least part of the basic modality comprises applying a predefined spatial mask to each image of the sequence so as to mask at least one area of the image,
- the reference datum corresponds to one successive image in the temporal sequence with respect to the current image delivered as input to the model,
- each predictor is trained to predict said successive image from the current image masked by means of said mask.

4. Method for training an anomaly-detecting model according to claim 3, wherein:

   - the multimedia data (201) are further represented, in an additional modality, by an optical flow sequence,
   - the step of masking (202) at least part of the additional modality comprises masking the entirety of the optical flow,
   - the reference datum is the optical flow,
   - each predictor is trained to predict the optical flow from the masked current image in the basic modality.

5. Method for training an anomaly-detecting model according to any one of claims 3 or 4, wherein:

   - the multimedia data (201) are further represented, in an additional modality, by a sequence comprising, for each image, a set of classes of objects detected in the image,
   - the step of masking (202) at least part of the additional modality comprises masking the entirety of the sequence of classes of objects,
   - the reference datum is the sequence of classes of objects,
   - each predictor is trained to predict the sequence of classes of objects from the masked current image in the basic modality.

6. Method for training an anomaly-detecting model according to any one of claims 3 to 5:

   - the multimedia data (201) are further represented, in an additional modality, by an audio sequence synchronized with the sequence of images,
   - the step of masking (202) at least part of the additional modality comprises removing at least part of the audio sequence,
   - the reference datum is the audio sequence,
   - each predictor is trained to predict the audio sequence from the masked current image in the basic modality.

7. Method for training an anomaly-detecting model according to any one of claims 1 or 2, wherein:

   - the multimedia data (201) are represented, in a basic modality, by a set of images,
   - the step of masking (202) at least part of the basic modality comprises applying a predefined spatial mask to each image so as to mask at least one area of the image,
   - the reference datum corresponds to the current image provided as input to the model but not masked,
   - each predictor is trained to predict said current image from the current image masked by means of said mask.

8. Method for training an anomaly-detecting model according to claim 7, wherein:

   - the multimedia data (201) are further represented, in a second modality, by a set of multispectral images,
   - the step of masking (202) at least part of the second modality comprises removing images at at least one given wavelength,
   - the reference datum is the set of multispectral images,
   - each predictor is trained to predict one multispectral image from the masked current image in the basic modality.

9. Method for training an anomaly-detecting model according to any one of the preceding claims, wherein the model comprises:

   - a first projector neural network (P) receiving as input a masked datum and trained to convert the input into a latent representation ($h_0$),
   - a recurrent neural network (R) trained to produce a succession of states ($h_1$, ... $h_n$) recurrently, the initial state ($h_0$) being equal to the latent representation,
   - a plurality of predictor neural networks ($f_T$) each corresponding to one modality, each predictor network receiving as input the masked datum and a state provided by the recurrent network, the number of states generated by the recurrent network being equal to the number of predictors for one modality.

10. Computer-implemented method for detecting anomalies in a multimedia dataset having at least one modality, the method comprising the steps of:

   - executing (703), for said dataset, the machine-learning model trained by means of the training method according to any one of the preceding claims, the model receiving as input the data (702) masked by means of masks identical to those used for the training of said model and producing as output a plurality of predictions,
- computing (704) the first cost function from the predictions generated by the model,
- computing (705) an anomaly score from a distance between the first cost function and a value representative of the first cost function for a dataset containing no anomalies,
- comparing (706) the anomaly score with a predetermined detection threshold and deducing therefrom the presence or absence of anomalies in the data.

11. Computer program comprising code instructions for implementing methods according to any one of claims 1 to 10 when said program is executed on a computer.

12. Computer-readable recording medium on which the computer program according to claim 11 is recorded.

[Fig. 1]

FIG.1

[Fig.2]

FIG.2

[Fig. 3]

FIG.3

[Fig. 4]

FIG.4

[Fig. 5]

FIG.5

[Fig.6]

FIG.6

[Fig.7]

```
┌─────────────────┐
│ Données réelles │──── 701
└─────────────────┘
         │
         ▼
┌─────────────────┐
M ──────▶│    Masquage     │──── 702
└─────────────────┘
         │
         ▼
┌─────────────────┐
│ Calcul prédictions │──── 703
└─────────────────┘
         │
         ▼
┌─────────────────┐
│ Calcul première │──── 704
│ fonction de cout │
└─────────────────┘
         │
         ▼
┌─────────────────┐
│  Calcul score   │──── 705
│   d'anomalie    │
└─────────────────┘
         │
         ▼
┌─────────────────┐
│ Comparaison seuil │──── 706
└─────────────────┘
```

FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DUC TAM NGUYEN** ; **ZHONGYU LOU** ; **MICHAEL KLAR** ; **THOMAS BROX**. Anomaly Detection With Multiple-Hypotheses Predictions. *ICML*, 2018
- **ZHIAN LIU** ; **YONGWEI NIE** ; **CHENGJIANG LONG** ; **QING ZHANG** ; **GUIQING LI**. A hybrid video anomaly detection framework via memory-augmented flow reconstruction and flow-guided frame prediction. *ICCV*, 2021
- **MARIANA-LULIANA GEORGESCU et al.** Anomaly Detection in Video via Self-Supervised and Multi-Task Learning. *ARXIV.ORG*, 2021